# EUROPEAN PATENT APPLICATION

(11) **EP 4 693 625 A1**
(43) Date of publication of application: **11.02.2026**
(21) Application number: 24844198.2
(22) Date of filing: 05.02.2024
(51) Int. Cl.: H01M 50/103, H01M 50/30, H01M 50/15

(54) **BATTERY CELL, BATTERY PACK, AND ELECTRICAL APPARATUS**

(30) Priority: 21.07.2023 CN 202321935563 U
(71) Applicant: Contemporary Amperex Technology Co., Limited, Ningde, Fujian 352100 (CN)
(72) Inventor: WU, Kai, Ningde, Fujian 352100 (CN); QUAN, Chao, Ningde, Fujian 352100 (CN); LI, Yao, Ningde, Fujian 352100 (CN); LI, Wei, Ningde, Fujian 352100 (CN)
(74) Representative: Kraus & Lederer PartGmbB
(86) International application number: PCT/CN2024/076162
(87) International publication number: WO 2025/020499

(57) **Abstract**

This disclosure discloses a battery cell, a battery pack, and an electric apparatus, pertaining to the field of battery technologies. The battery cell includes a housing, a bare cell, and a pressure relief structure. The housing internally forms an accommodating cavity. The bare cell is accommodated in the accommodating cavity. The pressure relief structure is mounted on a first wall surface of the housing and configured to actuate when a pressure or temperature in the accommodating cavity reaches a threshold to communicate the accommodating cavity with an external space. The first wall surface forms a protruding structure protruding toward an interior of the accommodating cavity, and the protruding structure is configured to abut against the bare cell to form a flow channel between the bare cell and the first wall surface.

## Description

### CROSS-REFERENCE TO RELATED APPLICATIONS

This disclosure claims priority to Chinese Patent Application No.202321935563.0, filed on July 21, 2023, and entitled "BATTERY CELL, BATTERY PACK, AND ELECTRIC APPARATUS", which is incorporated herein by reference in its entirety.

### TECHNICAL FIELD

This disclosure relates to the field of battery technologies, and in particular, to a battery cell, a battery pack, and an electric apparatus.

### BACKGROUND

New energy batteries are increasingly widely used in life and industries. For example, new energy vehicles equipped with batteries have been widely used. In addition, batteries are increasingly used in the field of energy storage.

In the related art, there is a risk of explosion in battery cells during operation.

### CONTENT OF UTILITY MODEL

To solve the foregoing technical problem, this disclosure provides a battery cell, a battery pack, and an electric apparatus to reduce the risk of explosion in the battery cell.

This disclosure is implemented using the following technical solutions.

According to a first aspect of an embodiment of this disclosure, a battery cell is provided, including:
a housing, internally forming an accommodating cavity;
a bare cell, being accommodated in the accommodating cavity; and
a pressure relief structure, being mounted on a first wall surface of the housing and configured to actuate when a pressure or temperature in the accommodating cavity reaches a threshold to communicate the accommodating cavity with an external space.

The first wall surface forms a protruding structure protruding toward an interior of the accommodating cavity, and the protruding structure is configured to abut against the bare cell to form a flow channel between the bare cell and the first wall surface for a fluid to pass through.

In the battery cell of the embodiments of this disclosure, because the protruding structure protruding toward the interior of the accommodating cavity abuts against the bare cell in the accommodating cavity, a flow channel for fluid to pass through is formed between the bare cell and the first wall surface. Gas produced during thermal runaway of the battery cell can flow relatively smoothly through the flow channel toward the pressure relief structure and be discharged outside the housing through the pressure relief structure. In addition, formation of the flow channel reduces airflow resistance at a corner position in the housing adjacent to the flow channel, helping smooth gas discharge, thereby reducing the risk of explosion of the battery cell.

In an embodiment, a distance by which the protruding structure protrudes from the first wall surface is a first dimension, and the first dimension is D₁, satisfying 0.5 mm ≤ D₁ ≤ 5 mm.

In the embodiments of this disclosure, the first dimension may be greater than or equal to 0.5 mm and less than or equal to 5 mm. In a case of thermal runaway of the battery cell, this allows the flow channel between the bare cell and the first wall surface to have sufficient space for relatively smooth gas discharge, thereby reducing the risk of explosion, and also enabling relatively full utilization of space in the housing.

In an embodiment, the first dimension satisfies 2 mm ≤ D₁ ≤ 3 mm.

In the embodiments of this disclosure, the first dimension is defined within a relatively appropriate range, enabling the flow channel to discharge gas from the accommodating cavity relatively smoothly, thereby reducing the risk of explosion of the battery cell, and also allowing full utilization of the space within the housing.

In an embodiment, the housing is shaped as a cuboid, the distance by which the protruding structure protrudes from the first wall surface is the first dimension, a ratio of the first dimension to a width of the housing is a first ratio, the first dimension and the width of the housing have the same unit, and the first ratio K₁, satisfying 0.01 ≤ K₁ ≤ 0.5.

In the embodiments of this disclosure, a first ratio is within a relatively appropriate range, which reduces the risk of explosion of the battery cell during thermal runaway and enables full utilization of the space in the housing.

In an embodiment, the first ratio satisfies 0.2 ≤ K₁ ≤ 0.3.

In the embodiments of this disclosure, the first ratio is defined within a relatively appropriate range, enabling the flow channel to discharge gas relatively smoothly to reduce the risk of explosion of the battery cell and fully utilizing the space in the housing to accommodate the bare cell.

In an embodiment, the distance by which the protruding structure protrudes from the first wall surface is the first dimension, a ratio of the first dimension to a battery energy density is a second ratio, the first dimension is in millimeter, the battery energy density is in watt-hour per liter, and the second ratio is K₂, satisfying 0.0007 ≤ K₂ ≤ 0.01.

In the embodiments of this disclosure, the second ratio is greater than or equal to 0.0007 and less than or equal to 0.01, defined within a relatively appropriate range. When the battery cell undergoes thermal runaway, the range within which the second ratio is defined ensures that the flow channel formed by the spacing between the bare cell and the first wall surface has sufficient space for gas to be discharged relatively smoothly, thereby reducing the risk of explosion during thermal runaway. The range within which the second ratio is defined enables full utilization of the space in the housing to accommodate the bare cell.

In an embodiment, the second ratio satisfies 0.001 ≤ K₂ ≤ 0.008.

In the embodiments of this disclosure, the second ratio is within a relatively appropriate range, thereby reducing the risk of explosion of the battery cell during thermal runaway and fully utilizing the space in the housing to accommodate the bare cell.

In an embodiment, the distance by which the protruding structure protrudes from the first wall surface is the first dimension, the first dimension is D₁, satisfying 0.5 mm ≤ D₁ ≤ 5 mm, the housing is shaped as a cuboid, the ratio of the first dimension to the width of the housing is the first ratio, the first ratio is denoted as K₁, satisfying 0.01 ≤ K₁ ≤ 0.5, the first dimension and the width of the housing have the same unit, the ratio of the first dimension to the battery energy density is the second ratio, the first dimension is in millimeter, the battery energy density is in watt-hour per liter, the second ratio is K₂, satisfying 0.0007 ≤ K₂ ≤ 0.01, the width of the housing is D₂, satisfying 10 ≤ D₂ ≤ 100, and the battery energy density is E, satisfying 500 ≤ E ≤ 1000.

In the embodiments of this disclosure, because the first dimension, the battery energy density, and the width of the housing are all related to the smoothness of gas discharge through the flow channel and the space utilization rate in the housing. When these three parameters satisfy 0.5 ≤ D₁ ≤ 5, 10 ≤ D₂ ≤ 100, 500 ≤ E ≤ 1000, 0.01 ≤ D₁/D₂ ≤ 0.5, and 0.0007 ≤ D₁/E ≤ 0.01, these three parameters are generally restricted to a relatively appropriate range. This ensures that gas produced during thermal runaway of the battery cell is smoothly discharged from the housing, substantially preventing explosion during thermal runaway, and allowing the space in the housing to be relatively fully utilized to accommodate the bare cell.

In an embodiment, the first dimension satisfies 2 mm ≤ D₁ ≤ 3 mm, the first ratio satisfies 0.2 ≤ K₁ ≤ 0.3, the second ratio satisfies 0.001 ≤ K₂ ≤ 0.008, the width of the housing satisfies 20 ≤ D₂ ≤ 80, and the battery energy density satisfies 600 ≤ E ≤ 900.

In the embodiments of this disclosure, because the first dimension, the width of the housing, and the battery energy density are generally restricted to a relatively appropriate range. This ensures that gas produced during thermal runaway of the battery cell is smoothly discharged from the housing, substantially preventing explosion during thermal runaway, and allowing the space in the housing to be relatively fully utilized to accommodate the bare cell.

In an embodiment, the housing includes an end cover assembly, a pole, and a housing body, the end cover assembly and the housing body enclose to form the accommodating cavity, the pole is mounted on the end cover assembly, the pole is electrically connected to the bare cell, and the first wall surface is located on the housing body.

In the embodiments of this disclosure, the first wall surface is located on the housing body, and a position of the pressure relief structure mounted on the first wall surface avoids the pole mounted on the end cover assembly. A gas discharge direction of the pressure relief structure does not face the pole, thereby reducing the damage to the insulating material of the pole caused by high-temperature gas discharged by the pressure relief structure during thermal runaway, and reducing the risk of short circuit in the battery cell.

In an embodiment, a material of the housing body is a metal material.

In the embodiments of this disclosure, the metal material is relatively hard, and the use of metal for the housing body helps protection of the bare cell located in the housing body. Furthermore, the housing body is made of metal, both the first wall surface of the housing body and the protruding structure formed on the first wall surface are both made of metal. The metal material can withstand high temperatures, and even when the protruding structure made of metal comes into contact with high-temperature gas produced during thermal runaway, the protruding structure can still maintain the spacing between the bare cell and the first wall surface to form a flow channel for fluid to pass through, thereby enabling smooth gas discharge during thermal runaway of the battery cell.

In an embodiment, the pressure relief structure and the pole are arranged opposite each other, the pressure relief structure is located at one end of the housing body, and the pole is located at another end of the housing body.

In the embodiments of this disclosure, because the pressure relief structure and the pole are arranged opposite each other, the pressure relief structure is located at one end of the housing body, and the pole is located at another end of the housing body, the direction of gas discharge by the pressure relief structure is almost opposite the pole. This reduces the risk of short circuit caused by high-temperature gas discharged by the pressure relief structure damaging the insulating material on the pole during thermal runaway.

In an embodiment, the protruding structure has a weight-reducing cavity, and the weight-reducing cavity is located on a side of the protruding structure facing away from the accommodating cavity.

In the embodiments of this disclosure, the weight-reducing cavity is located on the side of the protruding structure facing away from the accommodating cavity. On one hand, a position of the weight-reducing cavity does not affect the protrusion of the protruding structure toward the bare cell. On the other hand, the weight-reducing cavity helps reduce the weight of the protruding structure, thereby helping lightweighting of the battery cell. Furthermore, the weight-reducing cavity being located on the side of the protruding structure facing away from the accommodating cavity allows the protruding structure to be formed on the first wall surface by stamping, making the processing of the protruding structure relatively simple and convenient.

In an embodiment, the distance by which the protruding structure protrudes from the first wall surface is greater than a distance by which the protruding structure protrudes from the pressure relief structure.

In the embodiments of this disclosure, because the distance by which the protruding structure protrudes from the first wall surface is greater than the distance by which the protruding structure protrudes from the pressure relief structure, the gas discharge space at the pressure relief structure is larger, helping the convergence and discharge of gas produced during thermal runaway toward the pressure relief structure, thereby reducing the risk of explosion of the battery cell.

According to a second aspect of an embodiment of this disclosure, a battery pack is provided, including:
a box body; and
any one of the foregoing battery cells, being located in the box body.

According to a third aspect of an embodiment of this disclosure, an electric apparatus is provided, including:
an apparatus body; and
a power supply component, being configured to supply power to the apparatus body, where the power supply component includes any one of the foregoing battery cells or any one of the foregoing battery packs.

### Effect of Utility Model:

In the embodiments of this disclosure, the protruding structure protruding toward the interior of the accommodating cavity abuts against the bare cell in the accommodating cavity, so that a flow channel for fluid to pass through is formed between the bare cell and the first wall surface. Gas produced during thermal runaway of the battery cell can flow relatively smoothly through the flow channel toward the pressure relief structure and be discharged outside the housing through the pressure relief structure. In addition, formation of the flow channel reduces airflow resistance at a corner position in the housing adjacent to the flow channel, helping smooth gas discharge, thereby reducing the risk of explosion of the battery cell.

### BRIEF DESCRIPTION OF DRAWINGS

Other advantages and benefits become apparent to persons of ordinary skill in the art by reading detailed descriptions of the following preferred implementations. The accompanying drawings are merely intended to illustrate the preferred implementations and are not intended to limit this disclosure. Throughout all the accompanying drawings, same reference signs represent same components. In the accompanying drawings:
FIG. 1 is an exploded view of a battery cell according to an embodiment of this disclosure, where a pole is located at an upper end of a housing body, and a pressure relief structure is located at a lower end of the housing body.
FIG. 2 is a schematic structural diagram of a housing body according to an embodiment of this disclosure, where an opening of an accommodating cavity faces upward, and a pressure relief structure is located at a lower end of the housing body.
FIG. 3 is an exploded view of a battery cell according to an embodiment of this disclosure, where end cover assemblies are provided at two opposite ends of a housing body along a length direction.
FIG. 4 is a schematic structural diagram of a housing body according to an embodiment of this disclosure, where an accommodating cavity has openings at two ends along a length direction of the housing body, and a pressure relief structure is located at a lower end of the housing body.
FIG. 5 is a schematic structural diagram of a housing body according to an embodiment of this disclosure, showing a protruding structure protruding toward an interior of an accommodating cavity.
FIG. 6 is an enlarged view of position A in FIG. 5.

### Description of reference signs:

1. Housing; 11. Accommodating cavity; 12. Housing body; 13. First wall surface; 2. Bare cell; 3. End cover assembly; 31. Cover body; 32. Protective patch; 4. Pole; 5. Pressure relief structure; 51. Valve body; 52. Protective film; 6. Protruding structure; 62. Weight-reducing cavity; 7. Support plate; 8. Mylar film; and 9. Connecting piece.

### DETAILED DESCRIPTION OF EMBODIMENTS

The following describes in detail the embodiments of technical solutions of this disclosure with reference to the accompanying drawings. The following embodiments are merely intended for a clearer description of the technical solutions of this disclosure and therefore are used as just examples which do not constitute any limitations on the protection scope of this disclosure.

Unless otherwise defined, all technical and scientific terms used in this specification shall have the same meanings as commonly understood by those skilled in the art to which this disclosure relates. The terms used in the specification are intended to merely describe the specific embodiments rather than to limit this disclosure. The terms "include", "comprise", and any variations thereof in the specification and claims of this disclosure as well as the foregoing description of drawings are intended to cover non-exclusive inclusions.

In the description of the embodiments of this disclosure, the technical terms "first", "second", "third", and the like are merely intended to distinguish between different objects, and shall not be understood as any indication or implication of relative importance or any implicit indication of the number, sequence or primary-secondary relationship of the technical features indicated. In the description of the embodiments of this disclosure, the meaning of "a plurality of" is more than two, unless otherwise specifically defined.

Reference to "embodiment" in this specification means that specific features, structures, or characteristics described with reference to the embodiment may be included in at least one embodiment of this disclosure. The word "embodiment" appearing in various places in the specification does not necessarily refer to the same embodiment or an independent or alternative embodiment that is exclusive of other embodiments. Persons skilled in the art explicitly and implicitly understand that the embodiments described in this specification may combine with another embodiment.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

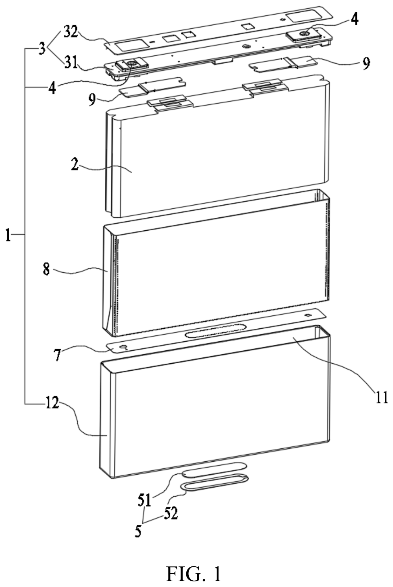

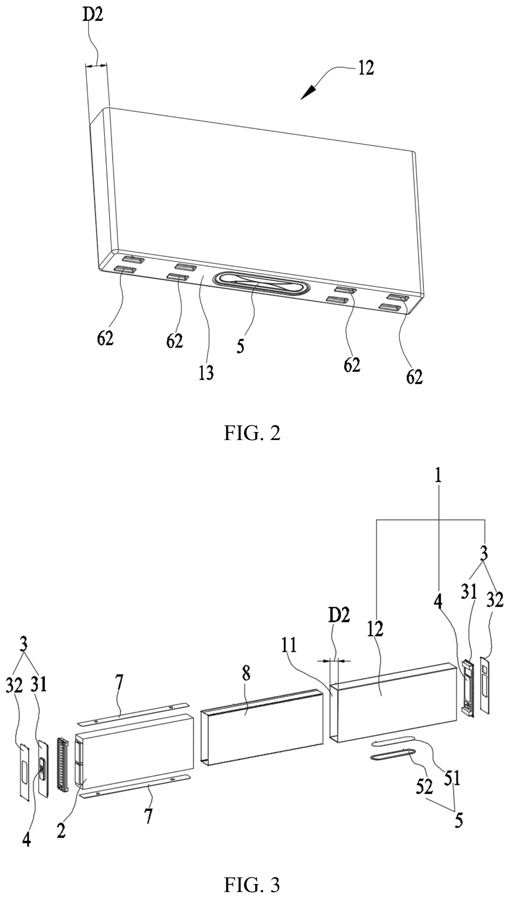

In the descriptions of the embodiments of this disclosure, orientations or position relationships indicated by the technical terms "width", "inner", "outer", "bottom", "upper", "lower", and the like are based on orientations or position relationships shown in FIG. 1 and FIG. 3, and are merely intended for ease of description of the embodiments of this disclosure, rather than indicating or implying that an apparatus or a component needs to have a particular direction or needs to be constructed, operated, or used in a particular orientation. Therefore, this shall not be construed as any limitation on the embodiments of this disclosure.

In the description of the embodiments of this disclosure, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in the embodiments of this disclosure as appropriate to specific situations.

In the description of the embodiments of this disclosure, unless otherwise specified and defined explicitly, the technical term "contact" should be broadly understood, which can be direct contact, contact through an intermediate medium layer, contact with no interaction force between the two in contact, or contact with interaction force between the two in contact.

Currently, new energy batteries are increasingly widely used in life and industry. New energy batteries have been widely used in energy storage power supply systems such as hydroelectric power plants, thermal power plants, wind power plants, and solar power plants, as well as in many other fields including electric transportation tools such as electric bicycles, electric motorcycles, and electric vehicles, military equipment, and aerospace. With continuous expansion of an application field of traction batteries, a market demand thereof is also constantly increasing.

As part of the inventive concept of this disclosure, before describing the embodiments of this disclosure, it is necessary to analyze the reasons for battery cell explosions in the related art to derive the technical solutions of the embodiments of this disclosure through reasonable analysis.

In the related art, a bare cell of a battery cell is located in an accommodating cavity of a housing. When thermal runaway occurs in the battery cell, generating a large amount of gas in the accommodating cavity, this gas needs to be discharged promptly to avoid triggering an explosion of the battery cell. The gas in the accommodating cavity is discharged through a pressure relief structure. Because the bare cell is substantially in contact with an inner surface of the housing, it is difficult to form a relatively smooth flow channel, resulting in high gas discharge resistance. In addition, the bare cell being substantially in contact with the inner surface of the housing causes high airflow resistance at a corner of the accommodating cavity, which is not conducive to gas discharge through the pressure relief structure mounted on the housing, posing a risk of explosion for the battery cell.

If the bare cell of the battery cell can be spaced a specific distance from the housing to form a flow channel, the gas in the accommodating cavity of the housing can flow relatively smoothly through the flow channel toward the pressure relief structure, thereby discharging the gas and reducing the risk of explosion of the battery cell. In view of this, a protruding structure is provided on a first wall surface of the housing to space the first wall surface and the bare cell by a specific distance, a flow channel is formed, reducing the risk of explosion of the battery cell.

Solutions of the embodiments of this disclosure may be, but are not limited to, applied to a battery cell, a battery module including a plurality of battery cells, or a battery pack including the battery cells or the battery modules, as well as an electric apparatus including the battery cells and the battery packs. A protruding structure 6 is configured to space a first wall surface 13 of a housing 1 of a battery cell from a bare cell 2 to form a flow channel, a risk of explosion of the battery cell is reduced. The reduced explosion risk of individual battery cells also reduces a corresponding risk of a battery module including the battery cells, a battery pack including the battery cells, and an electric device including the battery pack.

An electric apparatus is an apparatus that uses electrical energy as its energy source to implement corresponding functions by consuming electrical energy. For example, the electric apparatus includes but is not limited to a mobile phone, a tablet personal computer, a laptop computer, an electric toy, an electric tool, an electric bicycle, an electric car, a ship, a spacecraft, and the like. The electric toy may include a fixed or mobile electric toy, for example, a game console, an electric toy car, an electric toy ship, an electric toy aircraft, and the like. The spacecraft may include an aircraft, a rocket, a space shuttle, a spaceship, and the like.

In the electric apparatus of the embodiments of this disclosure, the electric apparatus may include an apparatus body and a power supply component, the power supply component is configured to supply power to the apparatus body, and the power supply component may include a battery cell or a battery pack.

The apparatus body is a main structure that consumes electrical energy to implement corresponding functions. For example, the electric apparatus may be a mobile phone, and the apparatus body is a part capable of implementing functions such as communication. The part capable of implementing functions such as communication is powered by a battery cell or a battery pack. For example, the electric apparatus may be a vehicle, and the apparatus body is a part capable of carrying passengers and traveling on roads. The part capable of carrying passengers and traveling on roads is powered by a battery cell or battery pack.

The power supply component is a component capable of outputting electrical energy. For example, electrical energy can be output through a battery cell. For example, electrical energy can be output through a battery pack composed of the battery cells. For example, electrical energy can be output through a battery module composed of the battery cells.

An example is provided below using a vehicle as the electric apparatus according to an embodiment of this disclosure.

The vehicle in the embodiments of this disclosure may be a fuel vehicle, a gas vehicle, or a new energy vehicle, and the new energy vehicle may be a battery electric vehicle, a hybrid electric vehicle, an extended range electric vehicle, or the like. The vehicle is provided with a battery pack inside, and the battery pack may be disposed at the bottom, front, or back of the vehicle. The battery pack may be configured to supply power for the vehicle, for example, configured as an operational power source for the vehicle. The vehicle may further include a controller and a motor, and the controller may be configured to control the battery pack to supply power to the motor. For example, the battery pack may be configured to satisfy a working electricity demand during startup, navigation, and driving of the vehicle.

In some embodiments of this disclosure, the battery pack may be used not only as the operational power source for the vehicle but also as a driving power source for the vehicle, completely or partially replacing fossil fuel or natural gas to provide driving power for the vehicle.

The battery pack in the embodiments of this disclosure may include a box body and a battery cell, and the battery cell is located in the box body.

The box body is a structure with an accommodating space, and the battery cell is located in the box body, with the box body accommodating the battery cells of the battery pack.

A plurality of battery cells may be provided, and the plurality of battery cells may be connected in series, parallel, or series-parallel. Being connected in series-parallel means both series and parallel connections exist among the plurality of battery cells. The plurality of battery cells may be directly connected in series, parallel, or series-parallel, and then an entirety of the plurality of battery cells is accommodated in the box body. Certainly, the plurality of battery cells may first be connected in series, parallel, or series-parallel to form a battery module, and the plurality of battery modules may then be connected in series, parallel, or series-parallel to form an entirety. The entirety of the plurality of battery modules connected in series, parallel, or series-parallel is accommodated in the box body. The battery pack may further include other structures, for example, the battery pack may include a busbar component to implement electrical connections between the plurality of battery cells.

The battery cell is a basic unit that can implement the mutual conversion between chemical energy and electrical energy.

In the embodiments of this disclosure, the battery cell may be a secondary battery, and the secondary battery is a battery cell that can activate active materials and continue to be used after the battery cell is discharged.

In the embodiments of this disclosure, the battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, and a lead storage battery. This is not limited in the embodiments of this disclosure.

Referring to FIG. 1, FIG. 3, and FIG. 5, the battery cell in the embodiments of this disclosure may include a housing 1, a bare cell 2, and a pressure relief structure 5. The housing 1 has an accommodating cavity 11. The bare cell 2 is located in the accommodating cavity 11. The pressure relief structure 5 is mounted on a first wall surface 13 of the housing 1, and the pressure relief structure 5 is configured to actuate when a pressure or temperature in the accommodating cavity 11 reaches a threshold to communicate the accommodating cavity 11 with an external space. The first wall surface 13 forms a protruding structure 6 protruding toward an interior of the accommodating cavity 11, and the protruding structure 6 is configured to abut against the bare cell 2 to form a flow channel between the bare cell 2 and the first wall surface 13 for a fluid to pass through.

The housing 1 is primarily configured to accommodate the bare cell 2, and the housing 1 provides certain protection to the bare cell 2 in the accommodating cavity 11.

For example, a shape of the housing 1 may be a cuboid or a cylinder. When the housing 1 is shaped as a cuboid, a corresponding battery cell is a prismatic battery cell. When the housing 1 is shaped as a cylinder, the corresponding battery cell is a cylindrical battery cell.

The accommodating cavity 11 is the accommodating space in the housing 1, and is configured to accommodate the bare cell 2.

The bare cell 2 is a main structure for converting chemical energy and electrical energy into each other.

For example, the bare cell 2 may include a positive electrode plate, a negative electrode plate, and a separator. In a charging and discharging process of the battery cell, active ions (for example, lithium ions) are intercalated and deintercalated between a positive electrode and a negative electrode. The separator is disposed between the positive electrode and the negative electrode to prevent short circuit of the positive electrode and negative electrode and to allow the active ions to pass through.

It can be understood that the bare cell 2 may have two different process structures.

For example, the positive electrode plate, the negative electrode plate, and the separator are wound as a whole in one direction, and the obtained battery cell is a wound battery cell.

For example, the positive electrode plate, the negative electrode, and the separator are folded back and forth as a whole, and the obtained battery cell is a laminated battery cell.

For example, the bare cell 2 may further include a tab, and the positive electrode plate and the negative electrode plate are electrically connected to corresponding tabs.

The pressure relief structure 5 is a structure capable of discharging gas from the accommodating cavity 11 to the outside of the housing 1. When thermal runaway occurs in the battery cell, generating a large amount of gas in the accommodating cavity 11, the gas in the accommodating cavity 11 can be discharged through the pressure relief structure 5.

For example, the pressure relief structure 5 is an explosion-proof valve.

For example, the explosion-proof valve is sheet-shaped.

The protruding structure 6 is a structure protruding from the first wall surface 13.

For example, the number of the protruding structures 6 may be one or more.

For example, a shape of the protruding structure 6 may be square, or the shape of the protruding structure 6 may be circular.

In the battery cell of the embodiments of this disclosure, because the protruding structure 6 protruding toward the interior of the accommodating cavity 11 abuts against the bare cell 2 in the accommodating cavity 11, a flow channel for fluid to pass through is formed between the bare cell 2 and the first wall surface 13. Gas produced during thermal runaway of the battery cell can flow relatively smoothly through the flow channel toward the pressure relief structure 5 and be discharged outside the housing 1 through the pressure relief structure 5. In addition, formation of the flow channel reduces airflow resistance at a corner position in the housing 1 adjacent to the flow channel, helping smooth gas discharge, thereby reducing the risk of explosion of the battery cell.

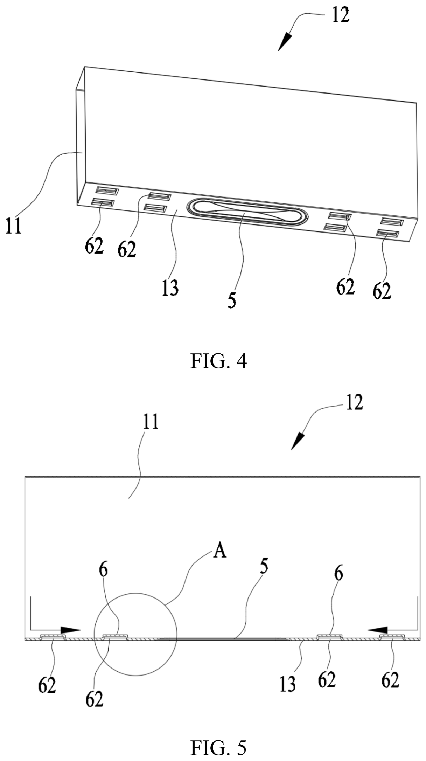

For example, referring to FIG. 5, a gas flows along a direction indicated by an arrow representing a gas flow direction, and a bending position of the arrow roughly indicates a corner position.

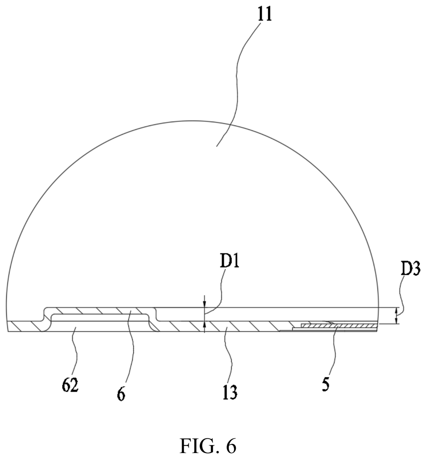

In an embodiment, referring to FIG. 5 and FIG. 6, a distance by which the protruding structure 6 protrudes from the first wall surface 13 is a first dimension, and the first dimension is D₁.

When the protruding structure 6 is in contact with the bare cell 2 located in the accommodating cavity 11, the first dimension roughly is the minimum size of the flow channel formed by the spacing between the bare cell 2 and the first wall surface 13. When the protruding structure 6 is not in contact with the bare cell 2 located in the accommodating cavity 11, the distance between the bare cell 2 and the first wall surface 13 may be greater than the first dimension. Therefore, the first dimension may roughly represent a size of the space of the flow channel for fluid to pass through.

For example, the first dimension is measured before a thermal runaway test is conducted on the produced battery cell, and the measurement may be performed at room temperature. For example, the measurement may be performed at an ambient temperature of 25°C.

For example, the measurement is performed by CT scanning before a thermal runaway test is conducted on the produced battery cell.

For example, a method for conducting a thermal runaway test may involve piercing the battery cell with a needle to short circuit a positive electrode and a negative electrode, thereby inducing thermal runaway.

In an embodiment, referring to FIG. 6, the first dimension satisfies 0.5 mm ≤ D₁ ≤ 5 mm.

For example, the first dimension may be 0.5 mm, 1 mm, 1.5 mm, 2 mm, 2.1 mm, 2.3 mm, 2.6 mm, 2.8 mm, 2.9 mm, 3 mm, 3.3 mm, 4.1 mm, 4.8 mm, or 5 mm.

In the embodiments of this disclosure, the first dimension satisfies 0.5 mm ≤ D₁ ≤ 5 mm. In a case of thermal runaway of the battery cell, this allows the flow channel between the bare cell 2 and the first wall surface 13 to have sufficient space for relatively smooth gas discharge, thereby reducing the risk of explosion, and also enabling relatively full utilization of space in the housing 1.

In an embodiment, referring to FIG. 6, the first dimension satisfies 2 mm ≤ D₁ ≤ 3 mm.

In the embodiments of this disclosure, the first dimension is defined within a relatively appropriate range, enabling the flow channel to discharge gas from the accommodating cavity 11 relatively smoothly, thereby reducing the risk of explosion of the battery cell, and also allowing full utilization of the space within the housing.

It can be understood that the first dimension in the embodiments of this disclosure is not limited to satisfying 0.5 mm ≤ D₁ ≤ 5 mm. The protruding structure 6 protruding toward the interior of the accommodating cavity 11 may be capable of abutting against the bare cell 2 in the accommodating cavity 11.

In an embodiment, referring to FIG. 6, the housing 1 is shaped as a cuboid, a ratio of the first dimension to the width of the housing 1 is the first ratio, the first dimension and the width of the housing 1 have the same unit, and the first ratio is K₁.

The first ratio is the ratio of the first dimension to the width of the housing 1.

For example, referring to FIG. 2, FIG. 3, and FIG. 6, the first dimension is D₁, the width of the housing 1 is D₂, and K₁ = D₁/D₂.

The first dimension and the width of the housing 1 have the same unit, and the first ratio is a dimensionless percentage with no unit.

For example, the width of the housing 1 is measured before a thermal runaway test is performed on the produced battery cell.

For example, the width of the housing 1 is measured by CT scanning before conducting a thermal runaway test on the produced battery cell.

In the embodiments of this disclosure, when the width of the housing 1 is greater, a pressure-bearing area of the first wall surface 13 and a pressure load borne by the first wall surface 13 are greater. It is necessary to increase the first dimension to help relatively smooth gas discharge to reduce the pressure load in the accommodating cavity 11. The first dimension is associated with the width of the housing 1 through the first ratio, so that the first dimension may be set according to the width of the housing 1.

In an embodiment, referring to FIG. 2, FIG. 3, and FIG. 6, the first ratio satisfies 0.01 ≤ K₁ ≤ 0.5.

For example, 0.01 ≤ K₁ ≤ 0.5, that is, 0.01 ≤ D₁/D₂ ≤ 0.5.

For example, the first ratio may be 0.01, 0.02, 0.06, 0.1, 0.13, 0.15, 0.18, 0.2, 0.21, 0.23, 0.25, 0.26, 0.28, 0.29, 0.3, 0.31, 0.35, 0.4, 0.46, or 0.5.

In the embodiments of this disclosure, the first ratio satisfies 0.01 ≤ K₁ ≤ 0.5, making the first ratio within a relatively appropriate range. For the corresponding width of the housing 1, the first dimension is sufficiently large, and the flow channel formed by the spacing between the bare cell 2 and the first wall surface 13 has sufficient space for relatively smooth gas discharge, helping reduce the risk of explosion of the battery cell during thermal runaway. The first ratio satisfying 0.01 ≤ K₁ ≤ 0.5 within a relatively appropriate range allows relatively full utilization of the space in the housing 1 to accommodate the bare cell 2.

In an embodiment, referring to FIG. 6, the first ratio satisfies 0.2 ≤ K₁ ≤ 0.3.

In the embodiments of this disclosure, the first ratio is defined within a relatively appropriate range, thereby enabling the flow channel to discharge gas relatively smoothly to reduce the risk of explosion of the battery cell, and fully utilizing the space in the housing 1 to accommodate the bare cell 2. Therefore, the space in the housing 1 is fully utilized.

It can be understood that the first ratio is not limited to satisfying 0.01 ≤ K₁ ≤ 0.5. The protruding structure 6 protruding toward the interior of the accommodating cavity 11 may be capable of abutting against the bare cell 2 in the accommodating cavity 11.

In an embodiment, referring to FIG. 6, a ratio of the first dimension to the battery energy density is the second ratio, the first dimension is in millimeter, the battery energy density is in watt-hour per liter, and the second ratio is K₂.

The symbol for the unit millimeter is mm.

The symbol for the unit watt-hour per liter is Wh/L. Watt is the unit of power, hour is the unit of time, and liter is the unit of volume.

The second ratio is the ratio of the first dimension to the battery energy density.

For example, referring to FIG. 6, the first dimension is D₁, the battery energy density is E, and K₂ = D₁/E.

The first dimension is in millimeter, the battery energy density is in watt-hour per liter, and the unit of the second ratio is millimeter-liter per watt-hour, with the symbol mmL/Wh.

In the embodiments of this disclosure, when the battery energy density of the battery cell is higher, an amount of gas produced in the same time period during thermal runaway is greater, and it is more critical to discharge gas as smoothly as possible to reduce the risk of explosion of the battery cell. The second ratio associates the first dimension with the battery energy density.

In an embodiment, the second ratio satisfies 0.0007 ≤ K₂ ≤ 0.01.

For example, 0.0007 ≤ K₂ ≤ 0.01, that is, 0.0007 ≤ D₁/E ≤ 0.01.

For example, the second ratio may be 0.0007, 0.0008, 0.0009, 0.001, 0.0015, 0.002, 0.0025, 0.003, 0.0035, 0.004, 0.0045, 0.005, 0.006, 0.007, 0.0076, 0.008, 0.0081, 0.0085, 0.0086, 0.009, or 0.01.

In the embodiments of this disclosure, the second ratio satisfies 0.0007 ≤ K₂ ≤ 0.01, defined within a relatively appropriate range. When the battery cell undergoes thermal runaway, the range defined for the second ratio ensures that the flow channel formed by the spacing between the bare cell 2 and the first wall surface 13 has sufficient space for gas to be discharged relatively smoothly, thereby reducing the risk of explosion during thermal runaway. The range defined for the second ratio enables full utilization of the space in the housing 1 to accommodate the bare cell 2, so that the space in the housing 1 is fully utilized.

In an embodiment, the second ratio satisfies 0.001 ≤ K₂ ≤ 0.008.

In the embodiments of this disclosure, the second ratio is within a relatively appropriate range, thereby reducing the risk of explosion of the battery cell during thermal runaway and fully utilizing the space in the housing 1 to accommodate the bare cell 2.

It can be understood that the second ratio is not limited to satisfying 0.0007 ≤ K₂ ≤ 0.01. The protruding structure 6 protruding toward the interior of the accommodating cavity 11 may be capable of abutting against the bare cell 2 in the accommodating cavity 11.

In an embodiment, referring to FIG. 6, the first dimension satisfies 0.5 mm ≤ D₁ ≤ 5 mm, the first ratio satisfies 0.01 ≤ K₁ ≤ 0.5, the second ratio satisfies 0.0007 ≤ K₂ ≤ 0.01, the width of the housing 1 satisfies 10 ≤ D₂ ≤ 100, and the battery energy density satisfies 500 ≤ E ≤ 1000.

For example, the width of the housing 1 may be 10, 20, 30, 40, 50, 60, 70, 80, 90, or 100.

For example, the battery energy density may be 500, 600, 700, 800, 900, or 1000.

In the embodiment of this disclosure, because the first dimension, the battery energy density, and the width of the housing 1 are all related to the smoothness of gas discharge through the flow channel and the space utilization rate in the housing 1. When these three parameters satisfy 0.5 ≤ D₁ ≤ 5, 10 ≤ D₂ ≤ 100, 500 ≤ E ≤ 1000, 0.01 ≤ D₁/D₂ ≤ 0.5, and 0.0007 ≤ D₁/E ≤ 0.01, these three parameters are generally restricted to a relatively appropriate range. This ensures that gas produced during thermal runaway of the battery cell is smoothly discharged from the housing 1, substantially preventing explosion during thermal runaway, and allowing the space in the housing 1 to be relatively fully utilized to accommodate the bare cell 2.

In an embodiment, the first dimension satisfies 2 mm ≤ D₁ ≤ 3 mm, the first ratio satisfies 0.2 ≤ K₁ ≤ 0.3, the second ratio satisfies 0.001 ≤ K₂ ≤ 0.008, the width of the housing satisfies 20 ≤ D₂ ≤ 80, and the battery energy density satisfies 600 ≤ E ≤ 900.

In the embodiment of this disclosure, because the first dimension, the width of the housing, and the battery energy density are generally restricted to a relatively appropriate range. This ensures that gas produced during thermal runaway of the battery cell is smoothly discharged from the housing 1, substantially preventing explosion during thermal runaway, and allowing the space in the housing 1 to be relatively fully utilized to accommodate the bare cell 2.

It can be understood that the width of the housing in the embodiments of this disclosure is not limited to satisfying 10 ≤ D₂ ≤ 100. The battery energy density in the embodiments of this disclosure is not limited to satisfying 500 ≤ E ≤ 1000. The width of the housing and the battery energy density may be set according to actual needs.

In an embodiment, the housing includes an end cover assembly 3, a pole 4, and a housing body 12, the end cover assembly 3 and the housing body 12 enclose to form the accommodating cavity 11, the pole 4 is mounted on the end cover assembly 3, the pole 4 is electrically connected to the bare cell 2, and the first wall surface 13 is located on the housing body 12.

The end cover assembly 3 is a structure configured to seal the accommodating cavity 11. When the bare cell 2 is placed in the accommodating cavity 11, the end cover assembly 3 and the housing body 12 enclose to form the accommodating cavity, enabling the end cover assembly 3 to seal an inlet and an outlet of the accommodating cavity 11, preventing the bare cell 2 from detaching from the housing body 12 as much as possible. In addition, the end cover assembly 3 is further configured to provide a position for mounting the pole 4.

For example, referring to FIG. 1 and FIG. 2, the end cover assembly 3 is located at one end of the housing body 12, and the poles 4 are all disposed on the end cover assembly 3. For example, the end cover assembly 3 is located at an upper end of the housing body 12, and the poles 4 are located at an upper end of the housing body 12.

For example, referring to FIG. 3 to FIG. 5, end cover assemblies 3 are provided at two opposite ends of the housing body 12 along a length direction of the housing body 12, with each end cover assembly 3 at each end correspondingly provided with a pole 4. For example, an arrangement direction of the two end cover assemblies 3 intersects with the vertical direction, and the end cover assemblies 3 are not located above the housing body 12. Specifically, the pole 4 with positive conductivity is a positive pole, located at one end of the housing body 12 along the length direction, and the pole 4 with negative conductivity is a negative pole, located at another end of the housing body 12 along the length direction.

The pole 4 being electrically connected to the bare cell 2 is the main structure for the bare cell 2 to input or output electrical energy. The bare cell 2 can discharge externally through the pole 4, and an external charging apparatus can charge the bare cell 2 through the pole 4.

For example, the pole 4 is electrically connected to the bare cell 2 through a tab.

For example, one pole 4 is a positive pole, and another pole 4 is a negative pole. The positive pole is electrically connected to a positive electrode plate through a tab, and the negative pole is electrically connected to a negative electrode plate through a tab.

The housing body 12 is a structure with a specific wall thickness outside the battery cell. The housing body 12 is primarily configured to accommodate the bare cell 2, thereby providing certain protection to the bare cell 2 and reducing the risk of damage due to the bare cell 2 being exposed outside.

The width of the housing is a width of the housing body.

In the embodiments of this disclosure, the first wall surface 13 is located on the housing body 12, and a position of the pressure relief structure 5 mounted on the first wall surface 13 avoids the pole 4 mounted on the end cover assembly 3. A gas discharge direction of the pressure relief structure 5 does not face the pole 4, thereby reducing the damage to the insulating material of the pole 4 caused by high-temperature gas discharged by the pressure relief structure 5 during thermal runaway, and reducing the risk of short circuit in the battery cell.

In an embodiment, the first wall surface 13 may be located on the end cover assembly 3.

In an embodiment, a material of the housing body 12 may be a metal.

In the embodiments of this disclosure, the metal material is relatively hard, and the use of metal for the housing body 12 helps protection of the bare cell 2 located in the housing body 12. Furthermore, the housing body 12 is made of metal, both the first wall surface 13 of the housing body 12 and the protruding structure 6 formed on the first wall surface 13 are both made of metal. The metal material can withstand high temperatures, and even when the protruding structure 6 made of metal comes into contact with high-temperature gas produced during thermal runaway, the protruding structure 6 can still maintain the spacing between the bare cell 2 and the first wall surface 13 to form a flow channel for fluid to pass through, thereby enabling smooth gas discharge during thermal runaway of the battery cell.

In an embodiment, the housing body 12 may be made of a material other than metal.

In an embodiment, referring to FIG. 2, and FIG. 4 to FIG. 6, the protruding structure 6 has a weight-reducing cavity 62, and the weight-reducing cavity 62 is located on a side of the protruding structure 6 facing away from the accommodating cavity 11.

The weight-reducing cavity 62 is a hollow structure, that is, the protruding structure 6 has no solid structure at the location of the weight-reducing cavity 62.

In the embodiments of this disclosure, the weight-reducing cavity 62 is located on the side of the protruding structure 6 facing away from the accommodating cavity 11. On one hand, a position of the weight-reducing cavity 62 does not affect the protrusion of the protruding structure 6 toward the bare cell 2. On the other hand, the weight-reducing cavity 62 helps reduce the weight of the protruding structure 6, thereby helping lightweighting of the battery cell. Furthermore, the weight-reducing cavity 62 being located on the side of the protruding structure 6 facing away from the accommodating cavity 11 allows the protruding structure 6 to be formed on the first wall surface 13 by stamping, making the processing of the protruding structure 6 relatively simple and convenient.

In an embodiment, the protruding structure 6 may not have a weight-reducing cavity 62, and the protruding structure 6 may be a solid structure.

In an embodiment, referring to FIG. 6, the distance by which the protruding structure 6 protrudes from the first wall surface 13 is greater than the distance by which the protruding structure 6 protrudes from the pressure relief structure 5.

The distance by which the protruding structure 6 protrudes from the first wall surface 13 is the first dimension described in the foregoing embodiments.

The distance by which the protruding structure 6 protrudes from the pressure relief structure 5 is a second dimension. Referring to the figures, the second dimension is D₃.

For example, referring to FIG. 6, the first dimension is D₁, the second dimension is D₃, and D₃ > D₁.

In the embodiments of this disclosure, because the distance by which the protruding structure 6 protrudes from the first wall surface 13 is greater than the distance by which the protruding structure 6 protrudes from the pressure relief structure 5, the gas discharge space at the pressure relief structure 5 is larger, helping the convergence and discharge of gas produced during thermal runaway toward the pressure relief structure 5, thereby reducing the risk of explosion of the battery cell.

In an embodiment, referring to FIG. 1, the pressure relief structure 5 and the pole 4 are arranged opposite each other, the pressure relief structure 5 is located at one end of the housing body 12, and the pole 4 is located at another end of the housing body 12.

For example, referring to FIG. 1, the pole 4 is located at an upper end of the housing body 12, and the pressure relief structure 5 is located at a lower end of the housing body 12. The pole 4 and the pressure relief structure 5 are arranged opposite each other along a vertical direction.

In the embodiment of this disclosure, because the pressure relief structure 5 and the pole 4 are arranged opposite each other, the pressure relief structure 5 is located at one end of the housing body 12, and the pole 4 is located at another end of the housing body 12, the direction of gas discharge by the pressure relief structure 5 is almost opposite the pole 4. This reduces the risk of short circuit caused by high-temperature gas discharged by the pressure relief structure 5 damaging the insulating material on the pole 4 during thermal runaway.

The pressure relief structure 5 and the pole 4 are not limited to being arranged opposite each other. In an embodiment, referring to FIG. 3, the poles 4 are arranged opposite each other at two ends of the housing body 12 along the length direction, and the pressure relief structure 5 is adjacent to the poles 4 at the two ends.

In an embodiment, referring to FIG. 1, the battery cell further includes a support plate 7, a mylar (mylar) film 8, and a connecting piece 9. The support plate 7 is located in the housing body 12. The support plate 7 is placed below the bare cell 2. The mylar film 8 is located in the housing body 12. The mylar film 8 circumferentially surrounds the bare cell 2 in the accommodating cavity 11. The connecting piece 9 is configured to be electrically connected to the bare cell 2 and the pole 4. The connecting piece 9 is electrically connected to the tab of the bare cell 2. The pressure relief structure 5 is an explosion-proof valve, the explosion-proof valve includes a valve body 51 and a protective film 52, the protective film 52 is attached to a side of the valve body 51 facing away from the bare cell 2. The material of the housing body 12 is aluminum. The end cover assembly 3 is located above the housing body 12. The end cover assembly 3 includes a cover body 31 and a protective patch 32, the protective patch 32 covers a side of the cover body 31 facing away from the bare cell 2, the protective patch 32 is made of an insulating material, and the protective patch 32 is configured to protect the cover body 31. The first dimension is greater than or equal to 0.5 mm and less than or equal to 5 mm, and the housing 1 is shaped as a cuboid. The ratio of the first dimension to the width of the housing 1 is the first ratio, and the first ratio is greater than or equal to 0.01 and less than or equal to 0.5. The first dimension and the width of the housing 1 have the same unit. The ratio of the first dimension to the battery energy density is the second ratio, and the second ratio is greater than or equal to 0.0007 and less than or equal to 0.01. The first dimension is in millimeter, and the battery energy density is in watt-hour per liter. The width of the housing 1 is greater than or equal to 10, and the width of the housing 1 is less than or equal to 100; the battery energy density is greater than or equal to 500, and the battery energy density is less than or equal to 1000. The weight-reducing cavity 62 of the protruding structure 6 is located on the side of the protruding structure 6 facing away from the accommodating cavity 11. The distance by which the protruding structure 6 protrudes from the first wall surface 13 is greater than the distance by which the protruding structure 6 protrudes from the pressure relief structure 5. The pressure relief structure 5 and the pole 4 are arranged opposite each other, the pressure relief structure 5 is located at one end of the housing body 12, and the pole 4 is located at another end of the housing body 12.

The mylar film 8 is a film made of tough polyester polymers.

In an embodiment, referring to FIG. 2, differing from the embodiment shown in FIG. 1, end cover assemblies 3 are provided at the two ends of the housing body 12 along the length direction. The support plates 7 are provided both above and below the bare cell 2.

Referring to Table 1, Table 1 is test results of the first dimension, the width of the housing 1, and the first ratio of the battery cell in the embodiments of this disclosure. The battery energy density and the second ratio of the battery pack corresponding to each serial number in the table are within the corresponding value ranges.

**Table 1**

| Serial No. | D₁ (mm) | D₂ (mm) | D₁/D₂ | Test Results |
|---|---|---|---|---|
| 1 | 0.2 | 10 | 0.02 | Battery exploded |
| 2 | 0.5 | 10 | 0.05 | Normal |
| 3 | 0.5 | 30 | 0.0167 | Normal |
| 4 | 0.5 | 60 | 0.0083 | Battery exploded |
| 5 | 0.5 | 100 | 0.005 | Battery exploded |
| 6 | 2 | 10 | 0.2 | Normal |
| 7 | 2 | 30 | 0.0667 | Normal |
| 8 | 2 | 60 | 0.0333 | Normal |
| 9 | 2 | 100 | 0.02 | Normal |
| 10 | 5 | 10 | 0.5 | Normal |
| 11 | 5 | 30 | 0.1667 | Normal |
| 12 | 5 | 60 | 0.0833 | Normal |
| 13 | 5 | 100 | 0.05 | Normal |
| 14 | 8 | 50 | 0.16 | Space utilization rate below 80% |

Referring to Table 2, Table 2 is test results of the first dimension, the battery energy density, and the second ratio of the battery cell in the embodiments of this disclosure. The width of the housing 1 and the first ratio of the battery pack corresponding to each serial number in the table are within the corresponding value ranges.

**Table 2**

| Serial No. | D₁ (mm) | E (Wh/L) | D₁/E | Technical Effect |
|---|---|---|---|---|
| 1 | 0.2 | 500 | 0.0004 | Battery exploded |
| 2 | 0.5 | 500 | 0.001 | Normal |
| 3 | 0.5 | 650 | 0.00077 | Normal |
| 4 | 0.5 | 800 | 0.00063 | Battery exploded |
| 5 | 0.5 | 1000 | 0.0005 | Battery exploded |
| 6 | 2 | 500 | 0.004 | Normal |
| 7 | 2 | 650 | 0.00308 | Normal |
| 8 | 2 | 800 | 0.0025 | Normal |
| 9 | 2 | 1000 | 0.002 | Normal |
| 10 | 5 | 500 | 0.01 | Normal |
| 11 | 5 | 650 | 0.00769 | Normal |
| 12 | 5 | 800 | 0.00625 | Normal |
| 13 | 5 | 1000 | 0.005 | Normal |
| 14 | 8 | 800 | 0.01 | Space utilization rate below 80% |

The above embodiments are merely intended for describing the technical solutions of this disclosure, but not for limiting this disclosure. Although this disclosure is described in detail with reference to the above embodiments, persons of ordinary skill in the art should understand that they may still make modifications to the technical solutions described in the above embodiments or make equivalent replacements to some or all technical features thereof. These modifications or replacements do not make the essence of the corresponding technical solutions depart from the scope of the technical solutions of the embodiments of this disclosure, and should all fall within the scope of the claims and this specification of this disclosure. In particular, various technical features mentioned in the embodiments can be combined in any manner provided that there is no structural conflict. This disclosure is not limited to the specific embodiments disclosed in this specification, but includes all technical solutions falling within the scope of the claims.

### Industrial practicability

In the embodiments of this disclosure, the protruding structure protruding toward the interior of the accommodating cavity abuts against the bare cell in the accommodating cavity, so that a flow channel for fluid to pass through is formed between the bare cell and the first wall surface. Gas produced during thermal runaway of the battery cell can flow relatively smoothly through the flow channel toward the pressure relief structure and be discharged outside the housing through the pressure relief structure. In addition, formation of the flow channel reduces airflow resistance at a corner position in the housing adjacent to the flow channel, helping smooth gas discharge, thereby reducing the risk of explosion of the battery cell.

## Claims

1. A battery cell, comprising:
a housing, internally forming an accommodating cavity;
a bare cell, being accommodated in the accommodating cavity; and
a pressure relief structure, being mounted on a first wall surface of the housing and configured to actuate when a pressure or temperature in the accommodating cavity reaches a threshold to communicate the accommodating cavity with an external space;
wherein the first wall surface forms a protruding structure protruding toward an interior of the accommodating cavity, and the protruding structure is configured to abut against the bare cell to form a flow channel between the bare cell and the first wall surface for a fluid to pass through.

2. The battery cell according to claim 1, wherein a distance by which the protruding structure protrudes from the first wall surface is a first dimension, and the first dimension is D₁, satisfying 0.5 mm ≤ D₁ ≤ 5 mm.

3. The battery cell according to claim 2, wherein the first dimension satisfies 2 mm ≤ D₁ ≤ 3 mm.

4. The battery cell according to any one of claims 1 to 3, wherein the housing is shaped as a cuboid, the distance by which the protruding structure protrudes from the first wall surface is the first dimension, a ratio of the first dimension to a width of the housing is a first ratio, the first dimension and the width of the housing have the same unit, and the first ratio is K₁, satisfying 0.01 ≤ K₁ ≤ 0.5.

5. The battery cell according to claim 4, wherein the first ratio satisfies 0.2 ≤ K₁ ≤ 0.3.

6. The battery cell according to any one of claims 1 to 5, wherein the distance by which the protruding structure protrudes from the first wall surface is the first dimension, a ratio of the first dimension to a battery energy density is a second ratio, the first dimension is in millimeter, the battery energy density is in watt-hour per liter, and the second ratio is K₂, satisfying 0.0007 ≤ K₂ ≤ 0.01.

7. The battery cell according to claim 6, wherein the second ratio satisfies 0.001 ≤ K₂ ≤ 0.008.

8. The battery cell according to any one of claims 1 to 7, wherein the distance by which the protruding structure protrudes from the first wall surface is the first dimension, the first dimension is D₁, satisfying 0.5 mm ≤ D₁ ≤ 5 mm, the housing is shaped as a cuboid, the ratio of the first dimension to the width of the housing is the first ratio, the first ratio is K₁, satisfying 0.01 ≤ K₁ ≤ 0.5, the first dimension and the width of the housing have the same unit, the ratio of the first dimension to the battery energy density is the second ratio, the first dimension is in millimeter, the battery energy density is in watt-hour per liter, the second ratio is K₂, satisfying 0.0007 ≤ K₂ ≤ 0.01, the width of the housing is D₂, satisfying 10 ≤ D₂ ≤ 100, and the battery energy density is E, satisfying 500 ≤ E ≤ 1000.

9. The battery cell according to claim 8, wherein the first dimension satisfies 2 mm ≤ D₁ ≤ 3 mm, the first ratio satisfies 0.2 ≤ K₁ ≤ 0.3, the second ratio satisfies 0.001 ≤ K₂ ≤ 0.008, the width of the housing satisfies 20 ≤ D₂ ≤ 80, and the battery energy density satisfies 600 ≤ E ≤ 900.

10. The battery cell according to any one of claims 1 to 9, wherein the housing comprises an end cover assembly, a pole, and a housing body, the end cover assembly and the housing body enclose to form the accommodating cavity, the pole is mounted on the end cover assembly, the pole is electrically connected to the bare cell, and the first wall surface is located on the housing body.

11. The battery cell according to claim 10, wherein a material of the housing body is a metal material.

12. The battery cell according to claim 10 or 11, wherein the pressure relief structure and the pole are arranged opposite each other, the pressure relief structure is located at one end of the housing body, and the pole is located at another end of the housing body.

13. The battery cell according to any one of claims 1 to 12, wherein the protruding structure has a weight-reducing cavity, and the weight-reducing cavity is located on a side of the protruding structure facing away from the accommodating cavity.

14. The battery cell according to any one of claims 1 to 13, wherein the distance by which the protruding structure protrudes from the first wall surface is greater than a distance by which the protruding structure protrudes from the pressure relief structure.

15. A battery pack, comprising:
a box body; and
the battery cell according to any one of claims 1 to 14, being located in the box body.

16. An electric apparatus, comprising:
an apparatus body; and
a power supply component, being configured to supply power to the apparatus body, wherein the power supply component comprises the battery cell according to any one of claims 1 to 14 or the battery pack according to claim 15.
